(19) Europäisches Patentamt
European Patent Office
Office européen des brevets

(11) **EP 2 046 082 A1**

(12) **EUROPEAN PATENT APPLICATION**

(43) Date of publication:
08.04.2009 Bulletin 2009/15

(51) Int Cl.:
*H04W 36/14* (2009.01)

(21) Application number: 07253924.0

(22) Date of filing: 03.10.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: **British Telecommunications public limited company**
81 Newgate Street
London EC1A 7AJ (GB)

(72) Inventor: **The designation of the inventor has not yet been filed**

(74) Representative: **Lofting, Coreena Fiona Anne et al**
BT Group Legal
Intellectual Property Department
PP C5A
BT Centre
81 Newgate Street
London EC1A 7AJ (GB)

(54) **Handover technique for wireless communications enabled devices**

(57) A method of triggering a network handover controlled by a communications device in a communications system comprising a plurality of networks with which the communications device can perform a handover operation to, the method comprising the steps of: determining a signal characteristic of each available candidate network in said communications system; forecasting a future value of said signal characteristic; determining a future handover margin for said signal characteristic of the network connection established by said communications device; determining if another available candidate network signal characteristic exceeds said handover margin at a future time, and if so, performing a handover operation to said other available candidate network, wherein said future handover margin for said signal characteristic is varied dynamically in dependence on said forecasted signal characteristic.

FIGURE 6

EP 2 046 082 A1

**Description**

The present invention relates to a handover technique for wireless communications enabled devices, in particular but not exclusively to mobile communications devices having multiple interfaces to different wireless network access points.

Mobile communications devices need to ensure that their network connection(s) support a suitable level of quality of service. Handover techniques to ensure that a mobile device has an appropriate connection for its current environment are well known, as is the use of time-series forecasting techniques to predict when a network handover is likely to be required. Such known handover decisions can be reactive (i.e., they occur when a characteristic of a received signal drops below a threshold) or predictive (i.e., they occur when it is anticipated that a characteristic of a received signal will drop below a threshold). It is known for handover decisions to be based on the received signal strength determined at the network end of the connection and/or at the communications device end.

A well known metric for on which to base the decision to perform a network handover either to another network of the same type (referred to in the art as a homogenous network handover) or to another network of a different type (referred to in the art as a heterogeneous network handover) is the received signal strength index (RSSI).

G. P. Pollini in his paper "Trends in Handover Design". IEEE Communications Magazine, March 1996, describes various algorithms which determine from RSSI derived determinants handover trigger conditions for a mobile communications device to change access points (APs) based on the RSSI determined by the device and/or network. For example, it is known to trigger a network handover when the RSSI of a target AP is greater than the combined sum of the RSSI of the serving AP and a fixed handover margin providing the RSSI of the service base station (BS) has fallen below a certain threshold. The use of the handover margin ensure that so called "ping-pong" handovers do not occur simply because of the fluctuations in signal strength which occur in wireless communications environments.

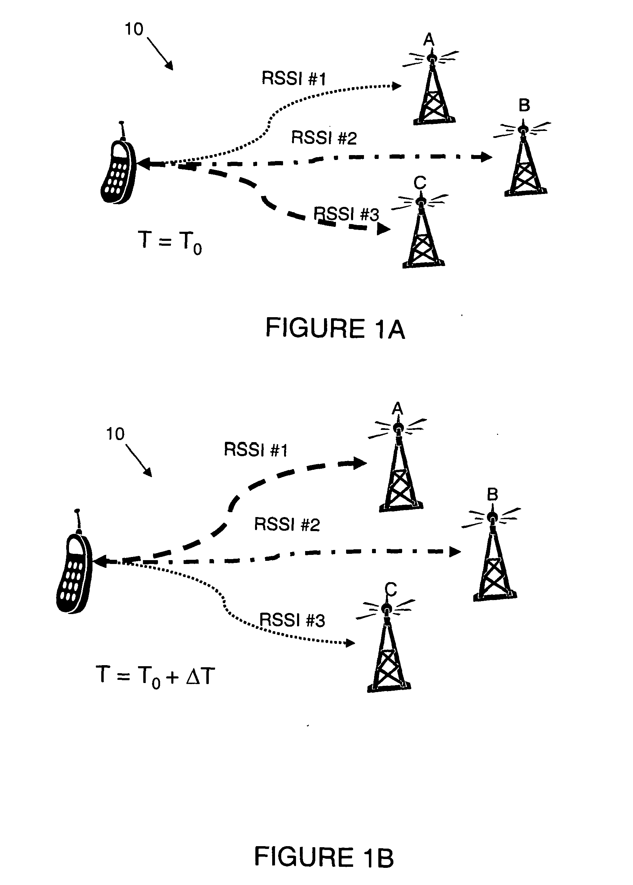

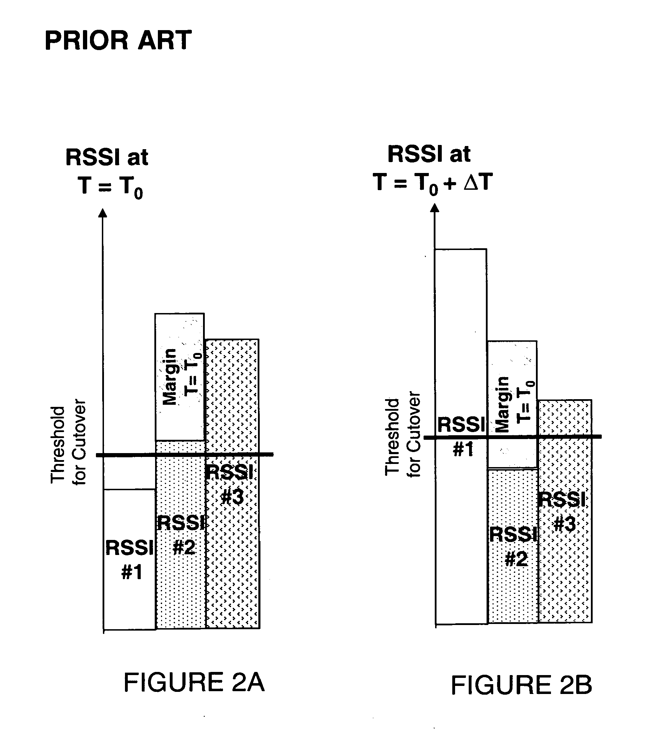

Consider the scenario shown in Figures 1A and 1B of the accompanying drawings. Figure 1A shows a communications system 10 comprising a mobile telephony device 12 and a plurality of wireless network access points 14a, 14b,14c. The mobile telephone device 12 comprises means to determine the RSSI of each of the access points 14a,b, c, respectively RSSI #1, #2, and #3 at time $T=T_0$. Figure 1B shows the same communications system at time $T=T_0 + \Delta T$. The comparative RSSIs #1, #2, and #3 at time $T=T_0$ are shown schematically in Figure 2A, and at $T=T_0 + \Delta T$ in Figure 2B.

In Figure 2A, RSSI #2 is below the threshold for being a candidate network for handover , RSSI #2 is just above the threshold for handover but is less than the RSSI #3, which is the strongest signal received by the mobile communications device 12 from an access point. The present of the fixed handover margin that Pollini describes however, ensures that the mobile communications device does not handover to form a connection with access point 14c (i.e., it does not handover to network #3). This is because RSSI #3 is less than the handover margin. Figure 2B shows that at a later time $T=T_0 + \Delta T$, however, RSSI #1 is above the margin for handover and so the mobile communications device 12 will hand over from the network with RSSI #2 to the network with RSSI #1.

The handover margins above which the RSSI from a candidate network must rise in order to be selected for a network handover have the same value in the communications system handover scheme that Pollini describes. However, a fixed margin scheme is limited in that a fixed protection margin is suitable for the signal strength is within a line-of-sight situation but is inappropriate for a fast fading environment and non-line-of-sight. Therefore in the latter situation there might be an increase in average handover delays. Wireless card manufacturers will normally try to address this problem, which results in a variety of different specifications which prevents a standardised approach supporting a fast handover from being adopted within the communications industry.

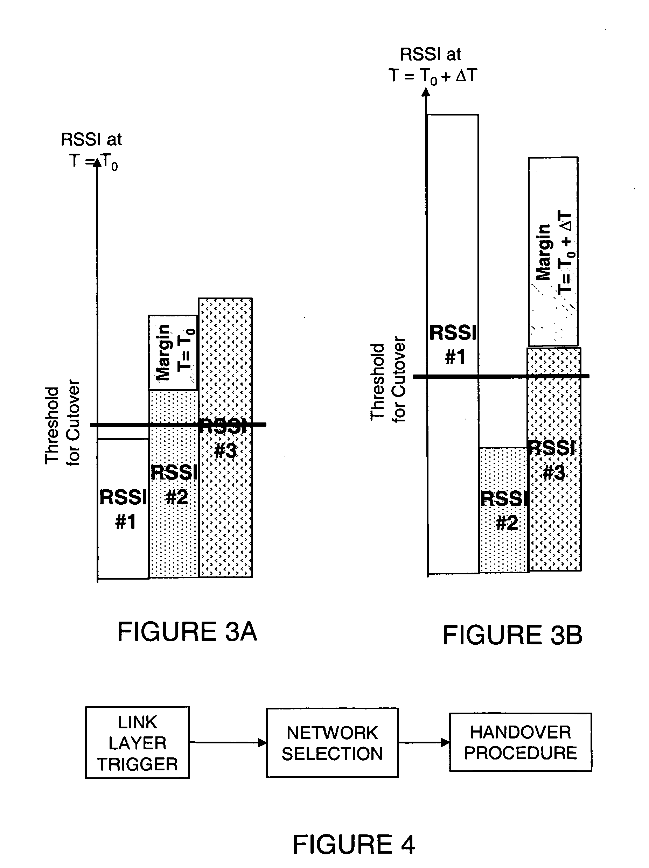

The invention seeks to provide a handover scheme for heterogeneous wireless networks in which a handover is triggered when the probability of a RSSI of a contender network rising above a threshold determined by the sum of the probable RSSI of the current network and a variable handover margin exceeds the probability of other contender networks rising above the probable RSSI of the current network and a variable handover margin. The contender network with the highest probability is then selected for handover. This is shown in more detail in Figures 3A and 3B of the accompanying drawings.

In Figure 3A, at time $T=T_0$ the RSSI handover margin width is much less than the RSSI handover margin width $T=T_0 + \Delta T$. In this scenario, at time $T=T_0$ the network would hand over to RSSI #3, whereas it did not where the value of the handover margin was fixed. At time $T=T_0 + \Delta T$, the handover margin is much larger than it was at time $T=T_0$, but even so, the RSSI #1 is sufficiently large itself to result in a network handover to that network.

The invention seeks to obviate and/or mitigate the above limitations of the prior art by providing a handover scheme in which wireless communication devices do not wait until all connectivity is lost or a substantial degradation of link quality is measured in order to seek alternative access points and/or base stations. Instead, a handover to the next available access point (AP) and/or base station (BS) is based on a continuous monitoring of all wireless links within the heterogeneous network environment. Accordingly, a wireless communication device according to the invention measures the signal strengths of all available access points and/or base stations operating in a communications network prior to itself making a handover decision based on a time series forecasting technique of future signal strengths of the access points and/or base stations likely to be available to the communications device. This handover technique is thus different to other techniques known to those of ordinary skill in the art which involve algorithms which only make a trigger decision by monitoring the long-term or short-term trends of the access point and/or base station signals.

SUMMARY STATEMENTS OF THE INVENTION

A first aspect of the invention provides a method of triggering a network handover performed by a communications network in a communications system comprising a plurality of networks with which the communications device can perform a handover operation to, the method comprising the steps of:

determining a signal characteristic of each available candidate network in said communications system;
forecasting a future value of said signal characteristic;
determining a future handover margin for said signal characteristic of the network connection established by said communications device;
determining if another available candidate network signal characteristic exceeds said handover margin at a future time, and if so, performing a handover operation to said other available candidate network, wherein said future handover margin for said signal characteristic is dynamically varied in response to said forecast signal characteristic.

Another aspect of the invention seeks to provide apparatus arranged to implement a method of triggering a network handover performed by a communications network in a communications system comprising a plurality of networks with which the communications device can perform a handover operation to, the apparatus comprising:

means to determine a signal characteristic of each available candidate network in said communications system;
means to forecast a future value of said signal characteristic;
means to determine a future protective margin for said signal characteristic of the network connection established by said communications device;
means to determine if another available candidate network signal characteristic exceeds said protective margin at a future time, and if so, performing a handover operation to said other available candidate network, wherein said future handover margin for said signal characteristic is dynamically varied in response to said forecasted signal characteristic.

Another aspect of the invention seeks to provide a computer readable medium carrying program steps which when executed on any apparatus aspect causes the communication device to carry out appropriate steps in a method aspect.

In one embodiment, the margin varies with time.

In one embodiment, the margin varies with the location of the communications device.

In one embodiment, the margin varies with the number of candidate networks.

In one embodiment, the future handover margin is dynamically dependent on the predicted the probability of a false trigger occurring.

In one embodiment, the future handover margin is dynamically dependent on the predicted the probability of a false non-trigger occurring.

The aspects and preferred features of the invention are as described herein above and by the accompanying independent and dependent claims respectively, and may be combined in any appropriate manner apparent to those skilled in the art.

Preferred embodiments of the invention will now be described with reference to the accompanying drawings which are by way of example only, and in which:

Figure 1A shows a communications system at time $T=T_0$;
Figure 1B shows the same communications system at time $T=T_0 + \Delta T$;
Figure 2A shows a prior art RSSI handover margin handover scheme at time $T=T_0$;
Figure 2B shows a prior art RSSI handover margin handover scheme at time $T=T_0 + \Delta T$;
Figure 3A shows a RSSI handover margin handover scheme according to an embodiment of the invention at time $T=T_0$;
Figure 3B shows the scheme of the embodiment of the invention shown in Figure 3A at time $T=T_0 + \Delta T$;
Figure 4 shows a handover flow chart according to the invention;
Figure 5 shows stages in a forecast generation scheme according to an embodiment of the invention; and

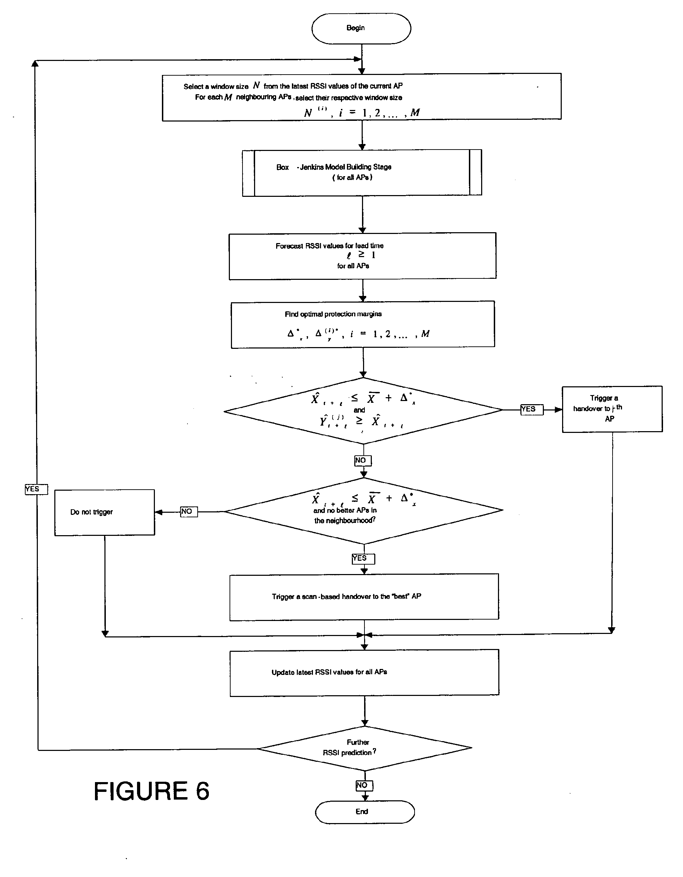

Figure 6 shows stages in a flow chat for triggering a handover according to an embodiment of the invention.

In the following description, for purposes of explanation, numerous specific details are set forth in order to provide a thorough understanding of the present invention. It will be evident, however, to one of ordinary skill in the art, that the present invention may be practiced without these specific details. In other instances, well-known structures and devices are shown in simplified diagrammatic form to facilitate explanation and additional detail known to one of ordinary skill in the art has been omitted for clarity. The description of preferred embodiments is not intended to limit the scope of the claims appended hereto.

The invention relates to a handover scheme for heterogeneous wireless networks which is triggered using a variable handover margin. Referring again to Figures 1A and 1B of the accompanying drawings, according to the invention, a wireless communications system 1 is provided where a client communications device 12 communicates with multiple networks through access points APs 14a,b,c. As the position of the communications device 13, the network traffic load of the communications system and as each channel condition changes over time, the communications device monitors the available networks and the corresponding link pipe properties. For example, network link characteristics such as the quality of channels (to maintain acceptable data rate, signal quality, BER, PER, etc). The mobile communications device 12 must decide pro-actively, from the link layer perspective, when it is the best time to switch to another network or channel.

The invention uses a smart trigger technique to trigger a heterogeneous network handover. The term "smart trigger" is used herein to refer to a link-level trigger as is, for example, defined in IEEE 802.21. The link-level trigger provides state and predictive information about the link to the communication device.

In a preferred embodiment of the invention, vertical handovers are initiated by the client mobile communications device 12 using one or more smart triggers to select the best available AP for seamless connectivity. The smart triggers are determined using a conventional time series forecasting techniques derived from the current RSSI values. The smart triggers advantageously enable one embodiment of a mobile communications device according to the invention to initiate a handover procedure with less error margin. One embodiment of the invention also reduces computational complexities (compared with other forecasting techniques known in the art).

Figure 4 of the accompanying drawings shows the main steps in a handover technique in terms of a handover flow chart. Firstly, a link layer trigger step occurs if a system component monitoring the link layer properties determines a threshold has been crossed. Secondly, a network selection step occurs in which a system component selects a target network technology and base station/access point. Finally, the handover takes place.

Those of ordinary skill in the art will be aware of handover algorithms which wait until the link quality between the mobile device 12 and its access point (AP) deteriorates substantially before invoking a trigger mechanism which connect the device 12 to the nearest available AP.

The invention in contrast, provides a handover scheme for a communications system comprising a plurality of mobile communications devices in which each mobile device does not wait until all connectivity is lost or a substantial degradation of link quality is measured in order to seek alternative APs. Instead handovers to the next available AP is based on a continuous monitoring of all wireless links within the heterogeneous network environment.

In one embodiment of the invention, the mobile device 12 measures the signal strengths of all available APs operating in the network (current channel and partial overlapping channels) and then makes its decision based on a time series forecasting technique of future signal strengths of the APs. In one embodiment, to make reliable forecast of RSSI values of neighbouring APs, a statistical models is built for a time series of RSSI values for each of the co-channel and partially overlapping channel APs within the client vicinity. Time-series and forecasting scheme susch as the AutoRegressive Integrated Moving Average (ARIMA) mobel are well known to those of ordinary skill in the art.

In one embodiment of the invention, the Box-Jenkins (see G.E.P. Box, G. M. Jenkins and G. C. Reinsel, Time Series Analysis: Forecasting and Control, Third ed.. Holden-Day, 1994) methodology is utilised where the technique advocates an AutoRegressive Integrated Moving Average (ARIMA) models to find the best fit of an RSSI time series $\{X_t\}^N_{t=1}$ to its past values in order to make forecasts. Note that N is the size of the window for the series of data.

Let $\varepsilon_t$ denote a series of uncorrelated random variables with mean zero and variance $\sigma^2$. A moving average process of order q (MA(q)) is defined by

$$X_t = \sum_{j=0}^{q} \beta_j \varepsilon_{t-j} \qquad (1)$$

while an autoregressive process of order $p$ (AR(p)) is defined by

$$X_t = \sum_{i=1}^{p} \alpha_i X_{t-i} + \varepsilon_t . \tag{2}$$

Hence an ARMA($p$,$q$) process is defined by

$$X_t = \sum_{i=1}^{p} \alpha_i X_{t-i} + \sum_{j=0}^{q} \beta_j \varepsilon_{t-j} . \tag{3}$$

On the other hand an ARIMA($p$,$d$,$q$) process is a process whose $d$-th difference $\nabla^d X_t = \nabla^{d-1}(\nabla X_t) = \nabla^{d-1} X_t - \nabla^{d-1} X_{t-1}$ is an ARMA($p$,$q$) process.

In order to successfully model the time series via Box-Jenkins model, the first stage is to determine whether the selected series is stationary or if there is any significant seasonality that needs to be corrected (via spectral analysis). The following are few definitions for our modelling purposes:

**Definition 1** A time series is strongly/strictly stationary if ($X_t$, $X_{t+1}$,..., $X_{t+h}$) has the same joint distribution as ($X_s$, $X_{s+1}$,..., $X_{s+h}$) for all $t$, s and h.

**Definition 2** A time series is said to be weakly stationarity or stationary if

$$1. \ E(X_t) = E(X_{t+h}) = \mu < \infty$$

$$2. \ Var(X_t) = \sigma_x^2 < \infty$$

$$3. \ Cov(X_t, X_{t+h}) = Cov(X_s, X_{s+h}) < \infty.$$

Once stationarity and seasonality aspects of the series have been addressed, the next stage is to determine the plausible values of $p$ and $q$. The primary techniques for doing so are to compare the sample autocorrelation and partial autocorrelation plots with their theoretical counterparts. The following table summarizes the inventors use of the sample autocorrelation function for model identification in the best mode of the invention currently contemplated..

Table1 shows how the shape of the sample autocorrelation function indicates a particular forecasting model.

| SHAPE | INDICATED MODEL |
|---|---|
| Exponential, decaying to zero | AR model. Use the partial autocorrelation plot to identify the order of the autoregressive model. |
| Alternating positive and negative spikes, decaying to zero at higher lags | AR model. Use the partial autocorrelation plot to help identify the order. |
| One or more spikes, with the rest essentially zero | MA model. Order q can be identified when plot becomes zero at lags $q + j$ where $j \geq 1$. |
| Decay, starting after a few lags | ARMA model |
| All zero or close to zero | Data is essentially random. |
| High values at fixed intervals | Include seasonal autoregressive term. |
| No decay to zero | Series is not stationary. |

The inventors do not use sample autocorrelations and partial autocorrelations function values to select the order of the series. Instead the selection of the appropriate ARIMA process is determined using the Akaike's Information Criterion (AIC) (see H. Akaike, "A new look at the statistical model identification", IEEE Transactions on Automatic Control, Vol 19 (6), pp. 716-723, 1974) in one embodiment of the invention. In another embodiment of the invention, the Bayesian Information Criterion (BIC) technique is used for the selection of the appropriate ARMA processes (see G. Schwarz, "Estimating the dimension of a model", Annal of Statistics, Vol 6, pp. 461 - 464, 1978).

The range of potential ARMA models is estimated by maximum likelihood methods known to those of oridinary skill in the art. For a sample window size of N , the AIC is given by

$$AIC(p,q) \approx \ln(\hat{\sigma}_a^2) + \frac{2(p + q + 1)}{N} + c$$

(4)

and the BIC is given by

$$BIC(p, q) = \ln(\hat{\sigma}_a^2) + \frac{(p + q + 1)\ln(N)}{N}$$

(5)

where $\hat{\sigma}_a^2$ denotes the maximum likelihood estimate, $p$ and $q$ are the order of parameters estimated in the model, and c is a constant term. In the information criterion approach, the order (p, q) of the ARMA is chosen as the one that minimizes either the AIC or BIC.

This procedure provides a relatively fast model selection and is obtained without undergoing any visual inspection of the sample autocorrelation and partial autocorrelation function of the series. Once the model is identified through fitting processes such as AIC or BIC, to assess the suitability of the time series model selected, a portmanteau test of the residuals can be used (see Box et al. (1994)), and if the model is accepted it is used to predict the RSSI at the next time step.

At the forecasting stage, for an ARMA($p,q$) model, once the parameter values $\hat{\alpha}_i$, $i$ = 1,2,...,$p$ and $\hat{\beta}_j$, $j$ = 0,1,2,..., $q$ are estimated, and as $\hat{\varepsilon}_t = X_t - \hat{X}_t$, where $\hat{X}_t$ is an approximate value of $X_t$ from the ARMA model, for each lead time $\geq$ 1, the forecast values $\hat{X}_{t+\ell}$ can be determined from:

$$\hat{X}_{t + \ell} = \begin{cases} \sum_{i=1}^{p} \hat{\alpha}_i \hat{X}_{t + \ell - i} + \sum_{j=0}^{q} \hat{\beta}_j \hat{\varepsilon}_{t + \ell - j} & if \ \ell \leq q \\ \sum_{i=1}^{p} \hat{\alpha}_i \hat{X}_{t + \ell - i} & if \ \ell > q. \end{cases}$$

(6)

The forecasting stage aims at obtaining a forecast function in which the difference between the actual and forecasted RSSI values is as small as possible for each lead time. This is achieved by the model selection stage. In Box-Jenkins model the autoregressive operator decides the nature of the eventual forecast whilst the moving average operator is influential in determining the forecasted value up until its estimated order. In addition to calculating the best forecast, it is also necessary to specify their accuracy, so that, the risks associated with such a decision may be calculated. We do this by calculating probability limits on either side of each forecast, for example 50% and 95%.

Figure 4 of the accompanying drawings 1 summarizes the iterative approach to model building of a time series data where by using appropriate window size. In Figure 4 it is assumed that the data do not exhibit any seasonal characteristics and so accordingly, the forecasting model is built (step 20), and any trends etc. are only removed from the time series generated after the forecasting model has been generated.

If the time series is stationary the the series may be detrended using a difference method. If the time-series is not stationary, then an appropriate model is identified via AIC or BIC approach, the ARIMA model paraemeteres for $\alpha$, $\beta$ are estimated, and a check performed to determine if the model is statistically adquate. If not, then the process repeats. If the model is statistically adequate then the a return functionality is performed

In this embodiment of the invention, the client communications device 12 uses knowledge on all the APs operating on the current as well as overlapping channels. The client communications device 12 issues a triggers if its present AP forecasted RSSI value falls below its threshold value and if the forecasted RSSI value of a future AP exceeds its current AP forecasted RSSI value.

By denoting the neighbouring AP RSSI values as $Y_t^{(i)}$ where $i = 1,2,...,M$ where $M$ is the total number of all the neighbouring APs sharing either the same channel or overlapping channels, hence the client would only issue a trigger when

$$\hat{X}_{t+\ell} \leq \overline{X} \qquad \text{and} \qquad \hat{Y}_{t+\ell}^{(j)} \geq \hat{X}_{t+\ell}$$

(7)

where the index $j$ is defined as

$$j = \left\{ i : \max\{\hat{Y}_{t+\ell}^{(i)} - \overline{Y}^{(i)}, 0\}, i = 1, 2, \ldots, M \right\}$$

(8)

where $\overline{X}$ is the current AP RSSI threshold representing the mobile client minimal quality of service (QoS) it must support in order to operate successfully, $\overline{Y}^{(i)}$ is the $i$-th neighbouring RSSI threshold value and $\hat{Y}_{t+\ell}^{(j)}$ is the highest predicted RSSI value of all the neighbouring APs. The expression (8) denotes that the algorithm would only choose the "best" neighbouring AP for a handover from its current default AP. On the other hand, if there are no better APs operating on the same channel or overlapping channels, then the algorithmic scheme will not trigger a handover event. But in the event, if the current AP experienced a link deterioration, then a trigger is invoked via a scan-based handover (choosing the "best" AP with the highest signal strength).

Based on the forecasted RSSI values of the current AP and in order to minimize the error of decision making, a protection margin (or hysteresis factor) $\Delta_x \geq 0$ is provided according to the invntion. The protection margin augments the RSSI threshold value, $\overline{X}$ so that the client communications device has an enhanced threshold value, $\overline{X} + \Delta_x$ to ensure a better QoS. If the forecasted RSSI value is greater than the enhanced threshold value, then the system would not trigger a handover to another AP. Otherwise the client triggers a handover mechanism from its current AP and if the RSSI of a neighbouring AP is high enough then the client would switch to a new AP to be connected with. Of course, the procedure described above would lead us to two types of error: a false trigger error (or equivalently, unnecessary trigger and a false non-trigger (or missing trigger) error.

With this protection margin $\Delta_x$, and for a forecasted RSSI value $\hat{X}_{t+\ell}$ the probability in making a false trigger is defined as

$$P(\hat{X}_{t+\ell} \leq \overline{X} + \Delta_x, X_{t+\ell} \geq \overline{X})$$

(9)

where it is the error of committing a false trigger when the true RSSI value $X_{t+\ell}$ is greater than the threshold requirement $\overline{X}$ but the forecasted RSSI value, $\hat{X}_{t+\ell}$ shows that it is lower than the threshold value plus the protection margin. On the other hand, if the true RSSI value $X_{t+\ell}$ is less than the threshold requirement $\overline{X}$ but the forecasted RSSI value $\hat{X}_{t+\ell}$ concludes that it is greater than the threshold value plus the protection margin, then the scheme is committing a false non-trigger error and we define the probability of making a false non-trigger as

$$P(\hat{X}_{t+\ell} \geq \bar{X} + \Delta_x, \, X_{t+\ell} \leq \bar{X}).$$

(10)

Unlike assigning the protection margin with a fixed value (see V. Mhatre and K. Papagiannaki, "Using smart triggers for improved user performance in 802.11 wireless networks", MobiSys'06, June 2006), for a given margin error $\delta \in (0,1)$, the optimal protection margin $\Delta^*_x \geq 0$ is determined in an adaptive manner, for example, by solving the following optimization problem:

$$P\begin{cases} \text{minimize} & P(\hat{X}_{t+\ell} \geq \bar{X} + \Delta_x, \, X_{t+\ell} \leq \bar{X}) \\ \Delta_x \geq 0 \\ \text{subject to} & P(\hat{X}_{t+\ell} \leq \bar{X} + \Delta_x, \, X_{t+\ell} \geq \bar{X}) = \delta. \end{cases}$$

Given the stationarity of the time series model, the residuals $\hat{X}_t - X_t$ can be expressed as:

$$\varepsilon_t = \hat{X}_t - X_t \sim N(\mu_\varepsilon, \sigma^2_\varepsilon) \qquad\qquad (11)$$

where $E(\varepsilon_t) = \mu_\varepsilon$, $Var(\varepsilon_t) = \sigma^2_\varepsilon$ and $X_t$ is the true RSSI value at time t. Hence the probability of a false trigger occuring is:

$$P(\text{false trigger}) = P(\hat{X}_{t+\ell} \leq \bar{X} + \Delta_x, \, X_{t+\ell} \geq \bar{X})$$

$$= \int_{\bar{X}}^\infty P\left( Z \leq \left. \frac{\bar{X} + \Delta_x - X - \mu_\varepsilon}{\sigma_\varepsilon} \right| X = x \right) f_X(x) \, dx$$

$$= \int_{\bar{X}}^\infty \int_{-\infty}^{\frac{\bar{X} + \Delta_x - x - \mu_\varepsilon}{\sigma_\varepsilon}} \frac{1}{\sqrt{2\pi}} e^{-\frac{1}{2}z^2} \, dz \, f_X(x) \, dx$$

(12)

and the probability of a false non-trigger is given by:

$$P(\text{false non - trigger}) = P(\hat{X}_{t+\ell} \geq \overline{X} + \Delta_x, X_{t+\ell} \leq \overline{X})$$

$$= \int_{-\infty}^{\overline{X}} P\left(Z \geq \frac{\overline{X} + \Delta_x - X - \mu_\varepsilon}{\sigma_\varepsilon} \,\middle|\, X = x\right) f_X(x)\, dx$$

$$= \int_{-\infty}^{\overline{X}} \int_{\frac{\overline{X} + \Delta_x - x - \mu_\varepsilon}{\sigma_\varepsilon}}^{\infty} \frac{1}{\sqrt{2\pi}} e^{-\frac{1}{2}z^2}\, dz\, f_X(x)\, dx$$

(13)

where $Z \sim N(0,1)$ and $f_X(x)$ is the probability density function (pdf) of the true RSSI values.

Those of oridinary skill in the art will appreciate that the way in which the RSSI values are distributed does not affect the invention. One way for example is to approximate the RSSI values with a simple uniform distribution, normal or even log-normal distribution.

Once the pdf of the true RSSI is known and by substituting the expressions (12) - (13) into the optimization Problem P, and for a selected margin error $\alpha \in (0,1)$ the optimal protection margin $\Delta^*_x$ for various RSSI threshold values can be determined as described hereinbelow.

In addition, for the forecasted RSSI values of neighbouring APs (via Box-Jenkins model), and for each of the $i$-th APs, a protection margin $\Delta^{(i)}_y \geq 0$ is provided which minimizes the error of false selection of an AP for handover.

By analogy with the probabilities of making a false trigger and a false non-trigger, for each neighbouring APs, the probability of making false selection of an AP is

$$P(\hat{Y}^{(i)}_{t+\ell} \geq \overline{Y}^{(i)} + \Delta^{(i)}_y, Y^{(i)}_{t+\ell} \leq \overline{Y}^{(i)}), \qquad\qquad i = 1, 2, \ldots, M$$

(14)

and the probability of making a false rejection of an AP as

$$P(\hat{Y}^{(i)}_{t+\ell} \leq \overline{Y}^{(i)} + \Delta^{(i)}_y, Y^{(i)}_{t+\ell} \geq \overline{Y}^{(i)}), \qquad\qquad i = 1, 2, \ldots, M$$

(15)

where $\hat{Y}^{(i)}_{t+\ell}$ and $\overline{Y}^{(i)}$ are the $i$-th AP forecasted RSSI value for leads $\ell \geq 1$ and its RSSI threshold value respectively.

Furthermore, given the stationarity of the time series model the residuals $\hat{Y}^{(i)}_t - Y^{(i)}_t$ are given by

$$\varepsilon^{(i)}_t = \hat{Y}^{(i)}_t - Y^{(i)}_t \sim N(\mu^{(i)}_\varepsilon, (\sigma^{(i)}_\varepsilon)^2) \qquad\qquad (16)$$

where $E(\varepsilon^{(i)}_t) = \mu^{(i)}_\varepsilon$, $Var(\varepsilon^{(i)}_t) = (\sigma^{(i)}_\varepsilon)^2$ and $Y^{(i)}_t$ is the true RSSI value at time t for $i$-th neighbouring AP.

Based on the normality properties of the residuals, for a given margin error $\delta^{(i)} \in (0,1)$, the respective protection

margin $\Delta_y^{(i)*} \geq 0$ can be optimally found for each neighbouring AP in an adaptive manner by solving the following optimization problem:

$$P^{(i)} \begin{cases} \text{minimize} & P(\hat{Y}_{t+\ell}^{(i)} \leq \overline{Y}^{(i)} + \Delta_y^{(i)}, Y_{t+\ell}^{(i)} \geq \overline{Y}^{(i)}) \\ \Delta_y^{(i)} \geq 0 \\ \text{subject to} & P(\hat{Y}_{t+\ell}^{(i)} \geq \overline{Y}^{(i)} + \Delta_y^{(i)}, Y_{t+\ell}^{(i)} \leq \overline{Y}^{(i)}) = \delta^{(i)}. \end{cases}$$

Accordingly, the probability of a false AP selection occuring is, using similar steps to those described above, given by:

$$P(\text{false AP selection}) = P(\hat{Y}_{t+\ell}^{(i)} \geq \overline{Y}^{(i)} + \Delta_y^{(i)}, Y_{t+\ell}^{(i)} \leq \overline{Y}^{(i)})$$

$$= \int_{-\infty}^{\overline{Y}^{(i)}} P\left( Z^{(i)} \geq \frac{\overline{Y}^{(i)} + \Delta_y^{(i)} - Y^{(i)} - \mu_\varepsilon^{(i)}}{\sigma_\varepsilon^{(i)}} \;\middle|\; Y^{(i)} = y \right) f_{Y^{(i)}}(y)\, dy \qquad (17)$$

$$= \int_{-\infty}^{\overline{Y}^{(i)}} \int_{\frac{\overline{Y}^{(i)} + \Delta_y^{(i)} - y - \mu_\varepsilon^{(i)}}{\sigma_\varepsilon^{(i)}}}^{\infty} \frac{1}{\sqrt{2\pi}} e^{-\frac{1}{2}z^2}\, dz\, f_{Y^{(i)}}(y)\, dy$$

and the probabilty of a false AP rejection occuring is:

$$P(\text{false AP rejection}) = P(\hat{Y}_{t+\ell}^{(i)} \leq \overline{Y}^{(i)} + \Delta_y^{(i)}, Y_{t+\ell}^{(i)} \geq \overline{Y}^{(i)})$$

$$= \int_{\overline{Y}^{(i)}}^{\infty} P\left( Z^{(i)} \leq \frac{\overline{Y}^{(i)} + \Delta_y^{(i)} - Y^{(i)} - \mu_\varepsilon^{(i)}}{\sigma_\varepsilon^{(i)}} \;\middle|\; Y^{(i)} = y \right) f_{Y^{(i)}}(y)\, dy \qquad (18)$$

$$= \int_{\overline{Y}^{(i)}}^{\infty} \int_{-\infty}^{\frac{\overline{Y}^{(i)} + \Delta_y^{(i)} - y - \mu_\varepsilon^{(i)}}{\sigma_\varepsilon^{(i)}}} \frac{1}{\sqrt{2\pi}} e^{-\frac{1}{2}z^2}\, dz\, f_{Y^{(i)}}(y)\, dy$$

where $Z \sim N(0,1)$ and $f_{Y^{(i)}}(y)$ is the probability density function (pdf) of the true RSSI values of the neighbouring $i$-th AP. The distribution of the neighbouring APs RSSI values can be modelled, for example as uniform, normal or log-normal distributed random variables, using any appropriate techniques well known to those of ordinary skill in the art. By substituting the above expressions (17) - (18) into the optimization Problem $P^{(i)}$, and for a selected margin error $\delta^{(i)} \in (0,1)$, the optimal protection margin $\Delta_y^{(i)*}$ for various RSSI threshold values of other APs can be determined.

Thus in one embodiment of the invention, the criterion of a handover from a current AP to another AP is given by:

$$\hat{X}_{t+\ell} \leq \overline{X} + \Delta_x^* \text{ and } \hat{Y}_{t+\ell}^{(j)} \geq \hat{X}_{t+\ell} \qquad (19)$$

where the index $j$ is defined as

$$j = \left\{ i : \max\{\hat{Y}_{t+\ell}^{(i)} - \overline{Y}^{(i)} - \Delta_y^{(i)*}, 0\}, i = 1, 2, \ldots, M \right\}. \tag{20}$$

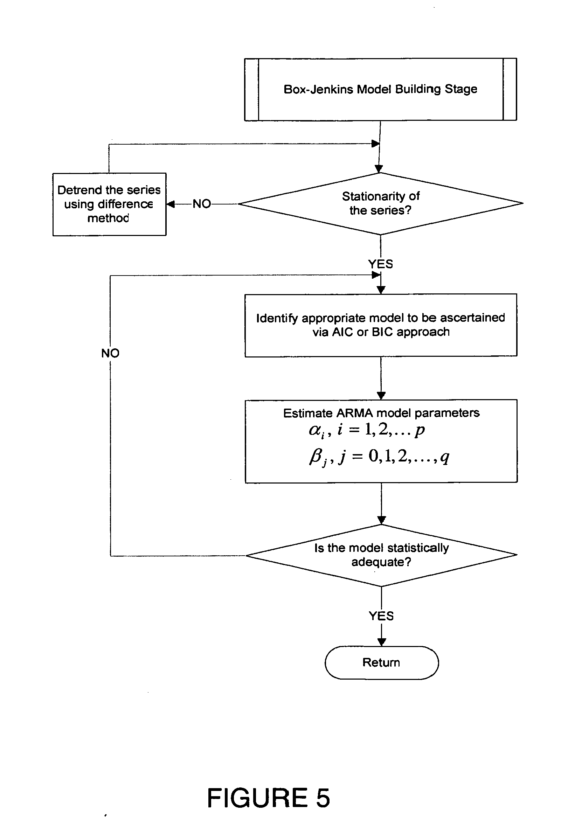

Figure 5 of the accompanying drawings shows an overview of the handover process for one embodiment of the invention.

Modifications to the above features of the invention and features having equivalent effect to the features known to those skilled in the art are implicitly included in the description, and the scope of the invention should be determined by the accompanying claims.

**Claims**

1. A method of triggering a network handover controlled by a communications device in a communications system comprising a plurality of networks with which the communications device can perform a handover operation to, the method comprising the steps of:

    determining a signal characteristic of each available candidate network in said communications system;
    forecasting a future value of said signal characteristic;
    determining a future handover margin for said signal characteristic of the network connection established by said communications device;
    determining if another available candidate network signal characteristic exceeds said handover margin at a future time, and if so, performing a handover operation to said other available candidate network, wherein said future handover margin for said signal characteristic is dynamically varied in response to said forecast signal characteristic.

2. A method as claimed in claim 1, wherein the margin varies with time.

3. A method as claimed in claim 1 or 2, wherein the margin varies with the location of the communications device.

4. A method as claimed in any one of claims 1 to 3, wherein the margin varies with the number of candidate networks.

5. A method as claimed in any preceding claim, wherein the future handover margin is dynamically dependent on the predicted the probability of a false trigger occurring.

6. A method as claimed in any preceding claim, wherein the future handover margin is dynamically dependent on the predicted the probability of a false non-trigger occurring.

7. Apparatus arranged to implement a method of triggering a network handover controlled by a communications device in a communications system comprising a plurality of networks with which the communications device can perform a handover operation to, the apparatus comprising:

    means to determine a signal characteristic of each available candidate network in said communications system;
    means to forecast a future value of said signal characteristic;
    means to determine a future handover margin for said signal characteristic of the network connection established by said communications device;
    means to determine if another available candidate network signal characteristic exceeds said handover margin at a future time, and if so, performing a handover operation to said other available candidate network, wherein said future handover margin for said signal characteristic is dynamically varied in response to said forecasted signal characteristic.

8. Apparatus as claimed in claim 7, wherein the margin varies with time.

9. Apparatus as claimed in claim 7 or 8, wherein the margin varies with the location of the communications device.

10. Apparatus as claimed in any one of claims 7 to 9, wherein the margin varies with the number of candidate networks.

11. Apparatus as claimed in any one of claims 7 to 10, wherein the future handover margin is dynamically dependent on the predicted the probability of a false trigger occurring.

12. Apparatus as claimed in any of claims 7 to 11, wherein the future handover margin is dynamically dependent on the predicted the probability of a false non-trigger occurring.

13. A computer readable medium carrying program steps which when executed on apparatus according to any one of claims 7 to 12, causes the communication device to carry out appropriate steps in the methods of any of claims 1 to 6.

10

RSSI #1

A

RSSI #2

B

RSSI #3

C

$T = T_0$

## FIGURE 1A

10

RSSI #1

A

RSSI #2

B

RSSI #3

C

$T = T_0 + \Delta T$

## FIGURE 1B

**PRIOR ART**

FIGURE 2A

FIGURE 2B

RSSI at
T = T₀

Threshold
for Cutover

Margin
T= T₀

RSSI
#3

RSSI
#2

RSSI
#1

**FIGURE 3A**

RSSI at
T = T₀ + ΔT

Threshold
for Cutover

Margin
T= T₀ + ΔT

RSSI
#1

RSSI
#3

RSSI
#2

**FIGURE 3B**

| LINK LAYER TRIGGER | → | NETWORK SELECTION | → | HANDOVER PROCEDURE |

**FIGURE 4**

15

Box-Jenkins Model Building Stage

Detrend the series using difference method ◄──NO── Stationarity of the series?

YES

Identify appropriate model to be ascertained via AIC or BIC approach

Estimate ARMA model parameters

$$\alpha_i, \; i = 1, 2, \ldots p$$

$$\beta_j, \; j = 0, 1, 2, \ldots, q$$

NO

Is the model statistically adequate?

YES

Return

# FIGURE 5

FIGURE 6

**European Patent Office**

## EUROPEAN SEARCH REPORT

Application Number

EP 07 25 3924

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/105520 A (ERICSSON INC [US]) 18 December 2003 (2003-12-18) * page 1, line 8 - line 10 * * page 4, line 2 - line 10 * * page 4, line 15 - page 5, line 2 * * page 5, line 3 - line 28 * ----- | 1-4, 7-10,13 | INV. H04Q7/38 |
| A | US 2004/097233 A1 (PECEN MARK E [US] ET AL) 20 May 2004 (2004-05-20) * page 2, paragraph 19 * * page 6, paragraph 107 * * page 7, paragraph 109 - paragraph 117 * * page 8, paragraphs 118,120,155,164 * ----- | 1-4, 7-10,13 | |
| D,A | POLLINI G P: "TRENDS IN HANDOVER DESIGN" IEEE COMMUNICATIONS MAGAZINE, IEEE SERVICE CENTER,NEW YORK, NY, US, vol. 34, no. 3, 1 March 1996 (1996-03-01), pages 82-90, XP000557380 ISSN: 0163-6804 * page 83, right-hand column, line 42 - line 48 * ----- | 1,7,13 | |

TECHNICAL FIELDS SEARCHED (IPC)

H04Q

The present search report has been drawn up for all claims

| Place of search | Date of completion of the search | Examiner |
|---|---|---|
| Berlin | 20 December 2007 | Bocking, Philip |

EPO FORM 1503 03.82 (P04C01)

**ANNEX TO THE EUROPEAN SEARCH REPORT
ON EUROPEAN PATENT APPLICATION NO.**                    EP 07 25 3924

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2007

| Patent document cited in search report | | Publication date | Patent family member(s) | | Publication date |
|---|---|---|---|---|---|
| WO 03105520 | A | 18-12-2003 | AT | 345656 T | 15-12-2006 |
| | | | AU | 2003237418 A1 | 22-12-2003 |
| | | | CN | 1659920 A | 24-08-2005 |
| | | | DE | 60309704 T2 | 06-09-2007 |
| | | | EP | 1514447 A1 | 16-03-2005 |
| | | | JP | 2005529567 T | 29-09-2005 |
| | | | US | 6745033 B1 | 01-06-2004 |
| US 2004097233 | A1 | 20-05-2004 | US | 2004097267 A1 | 20-05-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. P. POLLINI.** Trends in Handover Design. *IEEE Communications Magazine,* March 1996
- **H. AKAIKE.** A new look at the statistical model identification. *IEEE Transactions on Automatic Control,* 1974, vol. 19 (6), 716-723
- **G. SCHWARZ.** Estimating the dimension of a model. *Annal of Statistics,* 1978, vol. 6, 461-464
- **V. MHATRE ; K. PAPAGIANNAKI.** Using smart triggers for improved user performance in 802.11 wireless networks. *MobiSys'06,* June 2006